# EUROPEAN PATENT APPLICATION

(11) **EP 2 712 763 A1**
(43) Date of publication of application: **02.04.2014**
(21) Application number: 12382381.7
(22) Date of filing: 01.10.2012
(51) Int. Cl.: B60L 11/18

(54) **Electrical power system and method for managing a battery system**

(71) Applicant: Fico Triad, S.A., 08028 Barcelona (ES)
(72) Inventor: Motger Graus, Francisco Javier, E-08028 Barcelona (ES)
(74) Representative: ABG Patentes, S.L.

(57) **Abstract**

The present invention presents an electrical power system suitable for being installed in an electrical vehicle. The invention also presents a method for managing a battery system in such a way that it extends the electrical vehicle battery's autonomy.

## Description

### FIELD OF THE INVENTION

The present invention presents an electrical power system suitable for being installed in an electrical vehicle. The invention also presents a method for managing a battery system in such a way that it extends the electrical vehicle battery's autonomy.

### BACKGROUND OF THE INVENTION

Electrical vehicles are powered with batteries of a limited autonomy.

The technical problem of how to increase the autonomy of an electrically powered vehicle solved by the claimed invention is provided by a managing power system capable of using additional battery packs which are not necessarily compatible with the main battery pack due to a different voltage, a different chemical composition having a different behaviour, a different lifetime or a combination of these factors.

### DESCRIPTION OF THE INVENTION

The invention solves the formulated technical problems by presenting an electrical power system according to claim 1 and a method for managing a battery system according to claim 6. Dependent claims describe preferred embodiments of the invention.

A first aspect of the invention presents an *electrical power system suitable for electrical powered vehicles **characterized in that** the system comprises:*
- *a main electrical power line,*
- *a main battery pack connected to the main electrical power line by means of at least a disconnection device,*
- *a second electrical line,*
- *a DC*/*DC converter adapted to transfer the current from the second electrical line to the main electrical line in such a way the voltage of the output of the DC*/*DC converter is the required voltage on the main electrical line,*
- *means for receiving one or more additional battery packs in such a way each additional battery pack is connected to the second electrical line by means of at least one disconnection device,*
- *at least a processing unit in connection with the reading means adapted to keep only one disconnection device closed, the disconnection device of the main battery pack or one disconnection device of any of the additional battery packs,*
- *means for determining the state of charge of the main battery pack and the state of charge of the additional battery packs.*

Advantageously, the system according to the invention comprises means for receiving additional battery packs suitable for working once the main battery pack is deemed to be exhausted. A battery is deemed to be exhausted when the stored energy is below a predetermined value. The State of Charge is the energy level of the battery and, in most of the cases; it is estimated using algorithms that take into account the history of the voltage during the discharge. The algorithms may take into account other parameters such as the temperature or the evolution of the voltage in certain circumstances of consumption.

The estimation of the State of Charge of the main or of any secondary battery packs is performed by measuring and reading means suitable for reading the parameters needed to estimate such state of charge depending on the method used for the estimation. In an embodiment a voltmeter is in communication with a processing unit that monitors the evolution of the voltage. In a further embodiment, the processing unit run a more complex algorithm and also receives a signal from a thermometer in order to take into account the temperature for the estimation of the State of Charge.

The processing unit opens the connection between the contacts of the main disconnection device when it is considered that the main battery pack is exhausted an additional battery pack is required to powering the main line, and closes the connection between the contacts of a second disconnection device connecting the additional battery pack to the main electrical power line.

The processing unit can be a microcontroller adapted to control the opening and the closing of the disconnection devices. According to embodiments of the invention, the processing unit opens or closes the disconnection device by means of a further second processing unit operating at a higher voltage. In this particular case, the main processing unit command the second processing unit and this second processing unit is able to activate, because its higher voltage and therefore higher power, a relay.

The means for determining the State of Charge of the main battery pack and the state of charge of the additional battery packs, as it has been said, are means adapted to process the information from the reading means and other variables such as temperature, historic value of voltage on the batteries, peak loads on the main electrical power line, etc.

A second aspect of the present invention presents a *method for managing a battery system suitable for electrical powered vehicles wherein the battery system comprises:*
- *a main electrical power line,*
- *a main battery pack connected to the main electrical power line by means of at least a disconnection device,*
- *a second electrical line,*
- *a DC*/*DC converter adapted to transfer the current from the second electrical line to the main electrical line in such a way the voltage of the output of the DC*/*DC converter is the voltage required on the main electrical line,*
- *means for receiving one or more additional battery pack in such a way each additional battery pack is connected to the second electrical line by means of at least one disconnection device,*
- *a processing unit in connection with the reading means,*
- *means for determining the state of charge of the main battery pack and the state of charge of the additional battery packs, **characterized in that** the means for determining the state of charge monitors the state of charge of the main battery pack and the state of charge of each additional battery pack and the at least one processing unit keeps only one disconnection device closed, the disconnection device of the main battery pack or one disconnection device one of the additional battery packs, in such a way that:*
- *if the main battery pack is not deemed to be exhausted the disconnection device of the main battery pack is the one closed, else,*
- *the disconnection device of the main battery pack is open and, while at least an additional battery pack is not deemed to be exhausted, a disconnection device of one additional deemed to not be exhausted battery pack is closed and the other ones opened until this additional battery pack is deemed to be exhausted, then switching to the next deemed to not be exhausted additional battery pack.*

The system previously described is managed according to a method carried out by at least one processing unit, which manages to control the battery pack which is to be used in each stage of the whole system's autonomy.

Deemed to be exhausted refers to the state of the battery in which the State of Charge is lower than a predetermined value.

This value can be specified by the manufacturer of the battery.

When the disconnection device of the main battery pack is open, sequentially, a disconnection device of one additional battery pack is closed and the other ones opened wherein sequentially refers to a pre-established order.

An embodiment of a pre-established order is a sequential order among the auxiliary battery packs with a State of Charge over a defined value.

A further embodiment of a pre-established order is obtained generating a random sequence among the auxiliary battery packs with a State of Charge over a defined value.

An example of "defined value" is a value that can be preset in the device or can be introduced by the user.

A disconnection device is considered to be closed when its contacts are in contact in such a way that they provide electrical connection between them. Thus, when a disconnection device is closed, the battery pack connected to it is connected to the main power line. Besides, when a battery pack is connected to the main power line, none of the rest of battery packs is to be connected at the same time to the main power line except during the transition phase, in order to avoid sudden current cuts. When the system or the method is **characterized in that** only one battery pack, the main battery pack or one additional battery pack is powering the main line it has to be interpreted as it is possible that during the short transition period none of the battery packs is powering the line or that the two battery packs in transition are powering the line.

When a battery pack is used in the wording of the claim, it can be interpreted that a battery pack may consist of a group of batteries or cells wherein such group behaves as a battery pack. All the features described in this specification (including the claims, description and drawings) and/or all the steps of the described method can be combined in any combination, with the exception of combinations of such mutually exclusive features and/or steps.

### DESCRIPTION OF THE FIGURES

These and other characteristics and advantages of the invention will become clearly understood in view of the detailed description of the invention which becomes apparent from a preferred embodiment of the invention, given just as an example and not being limited thereto, with reference to the drawings.

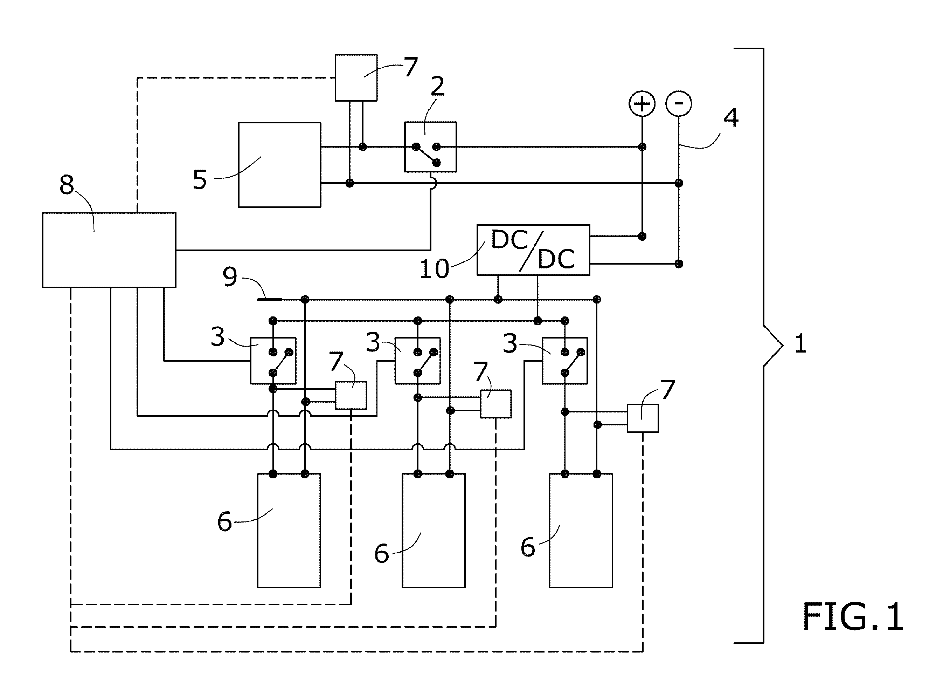

Figure 1 In this figure a particular example of a system according to the invention is represented wherein a second electrical line (9) and a DC/DC converter (10) can be distinguished.

### DETAILED DESCRIPTION OF THE INVENTION

In figure 1 it is represented a particular example of an electrical power system (1) according to an embodiment of the invention. The electrical power system (1) shown in figure 1 comprises the following elements:
- a main electrical power line (4),
- a main battery pack (5) connected to the main electrical power line (4) by means of at least a disconnection device (2),
- a second electrical line (9),
- a DC/DC converter (10) adapted to transfer the current from the second electrical line (9) to the main electrical line (4) in such a way the voltage of the output of the DC/DC converter (10) is the voltage required on the main electrical line (4),
- one or more additional battery packs (6) coupled by means for receiving such battery pack, each additional battery pack (6) connected to the second electrical line (9) by means of at least one disconnection device (3),
- the main battery pack (5) and each auxiliary battery pack (6) comprise measuring and reading means (7) adapted to read the voltage of the battery pack (5, 6),
- at least a processing unit (8) in connection with the reading means (7).

A particular embodiment of the invention is represented wherein the means for determining the State of Charge comprises the measuring and reading means (7) adapted to read the voltage of the battery pack (5, 6) and the processing unit (8) witch implements an algorithm adapted to estimate the instant State of Charge of each battery pack.

A skilled person would be able to carry out the invention according to different embodiments using other means for determining the State of Charge, for instance, using individual processing units located in each battery pack wherein each processing unit comprises its own measuring and reading means adapted to read the voltage of the particular battery pack it is located providing the state of charge to the main processing unit (8).

In figure 1 a second electrical line (9) and a DC/DC converter (10) are also shown. In such case, when an additional battery pack (6) is used which is smaller than the main battery pack (5) in order to save space, accordingly the voltage level of the additional battery pack (6) ready to deliver may be lower than the voltage level of the main battery pack (5). When this is the case, a DC/DC converter (10) is used to convert the voltage level to the voltage of the main line (4) which is usually the voltage that a vehicle needs to operate. In a particular example, the main battery pack (5) provides 300V and the additional ones provide 50V; therefore, a conversion ratio of 1:6 is required in the DC/DC converter (10).

In one particular embodiment of a system according to the invention, the system (1) has connection means for receiving or removing said additional battery pack (6). Advantageously, these connection means provide the system (1) with the versatility of having replaceable additional battery packs (6). In a particular embodiment the connection means are used for connecting additional battery packs (6) to the main battery power system in an electrical vehicle.

In a particular embodiment the processing unit (8) has an operation mode for manual handling wherein the disconnection device is operated by a user. Advantageously this operation mode allows a user to manually manage the disconnection of the battery packs (6).

In a particular embodiment the processing unit (8) checks the State of Charge of each battery pack, and their temperature, among other measurements, and decides which of them is suitable for being closed. If every battery pack is under the same conditions, then the pre-established order prevails.

In a particular embodiment the system comprises at least two processing units:
- a first processing unit (8) in connection with the reading means (7) and to a second processing unit not shown in figure 1,
- and the second processing unit in connection with any of the disconnection devices (2, 3),
   the first processing unit (8) is being adapted to keep only one disconnection device (2, 3) closed, the disconnection device (2) of the main battery pack (5) or one disconnection device (3) of any of the additional battery packs (6). The first processing unit (8) command the second processing unit which is able to activate the disconnection device (2) indicated by the first processing unit (8). Activate the disconnection device (2) has to be interpreted as to close or to open it.

In a particular embodiment of the invention, the disconnection means are a relay.

The reading means, in a particular example, are inside the battery pack, for instance being integral part of the battery pack.

In figure 1 the processing unit (8) shows a connection to the reading and measuring means (7) shown using a dashed line. This dashed line is used to differentiate clearly the power lines (4, 9), the connection lines acting over the disconnection devices (2, 3) and the lines used by the reading means (7).

In one particular embodiment according to the invention the additional battery packs (6) comprise individual battery packs produced under the same conditions, such as cell chemistry, internal constitution and producer, in order to have the same behavior, providing voltage together at the same time. Advantageously this particular embodiment allows having smaller packs, easier to carry out, or if the individual battery packs are connected in series, they can deliver higher voltage, thus reducing the requirements of the DC/DC converter, like the conversion ratio.

## Claims

1. Electrical power system (1) suitable for electrical powered vehicles **characterized in that** the system (1) comprises:
• a main electrical power line (4),
• a main battery pack (5) connected to the main electrical power line (4) by means of at least a disconnection device (2),
• a second electrical line (9),
• a DC/DC converter (10) adapted to transfer the current from the second electrical line (9) to the main electrical line (4) in such a way the voltage of the output of the DC/DC converter (10) is the required voltage on the main electrical line (4),
• means for receiving one or more additional battery packs (6) in such a way each additional battery pack (6) is connected to the second electrical line (9) by means of at least one disconnection device (3),
• at least a processing unit (8) in connection with the reading means (7), adapted to keep only one disconnection device (2, 3) closed, the disconnection device (2) of the main battery pack (5) or one disconnection device (3) of any of the additional battery packs (6),
• means (9) for determining the State of Charge of the main battery pack (5) and the state of charge of the additional battery packs (6).

2. Electrical power system (1) according to claim 1 wherein the main battery pack (5) and each auxiliary battery pack (6) further comprises measuring and reading means (7) adapted to read the voltage of the battery pack (5, 6).

3. Electrical power system (1) according to claim 1 or 2 wherein the means for determining the state of charge are comprised by the at least one processing unit (8), the measuring and reading means (7) wherein the processing unit (8) is adapted to execute an algorithm for the estimation of the state of charge.

4. A system according to claim any of the preceding claims wherein one or more additional battery packs (6) has connection means for connecting or removing said additional battery pack (6).

5. A system according to any of the preceding claims wherein at least one additional battery pack (6) comprises individual battery packs.

6. A system according to any of the preceding claims wherein it further comprises a second processing unit wherein,
• a first processing unit (8) is in connection with the means (9) for determining the state of charge and to the second processing unit,
• and the second processing unit is in connection with any of the disconnection devices (2, 3),
and wherein the first processing unit (8) is adapted to keep only one disconnection device (2, 3) closed, the disconnection device (2) of the main battery pack (5) or one disconnection device (3) of any of the additional battery packs (6) in such a way that the first processing unit (8) command the second processing unit which is able to activate the disconnection device (2) indicated by the first processing unit (8).

7. Method for managing a battery system suitable for electrical powered vehicles wherein the battery system comprises:
• a main electrical power line (4),
• a main battery pack (5) connected to the main electrical power line (4) by means of at least a disconnection device (2),
• a second electrical line (9),
• a DC/DC converter (10) adapted to transfer the current from the second electrical line (9) to the main electrical line (4) in such a way the voltage of the output of the DC/DC converter (10) is the voltage required on the main electrical line (4),
• means for receiving one or more additional battery packs (6) in such a way each additional battery pack (6) is connected to the second electrical line (9) by means of at least one disconnection device (3),
• a processing unit (8) in connection with the reading means (7),
• means (9) for determining the state of charge of the main battery pack (5) and the state of charge of the additional battery packs (6),
**characterized in that** the means (9) for determining the state of charge monitors the state of charge of the main battery pack and the state of charge of each additional battery pack (6) and the at least one processing unit keeps only one disconnection device (2, 3) closed, the disconnection device (2) of the main battery pack (5) or one disconnection device (3) one of the additional battery packs (6), in such a way that:
• if the main battery pack (5) is not deemed to be exhausted the disconnection device (2) of the main battery pack (5) is the one closed, else,
• the disconnection device (3) of the main battery pack (5) is open and while at least an additional battery pack (6) is not deemed to be exhausted, a disconnection device (3) of one additional deemed to not be exhausted battery pack (6) is closed and the other ones (6) opened until this additional battery pack (6) is deemed to be exhausted, then switching to the next deemed to not be exhausted additional battery pack (6).

8. Method according to claim 7 wherein a threshold State of Charge is predetermined such that a battery pack (5, 6) is deemed to be exhausted when the State of Charge of the battery pack (5, 6) is below that threshold.

9. Method according to claims 6 to 8 wherein the processing unit (8) has an operation mode for manual handling wherein the disconnection device is operated by a user.
